(19) **Europäisches Patentamt / European Patent Office / Office européen des brevets**

(11) **EP 1 748 459 B1**

(12) **EUROPEAN PATENT SPECIFICATION**

(45) Date of publication and mention
of the grant of the patent:
**24.05.2017  Bulletin 2017/21**

(51) Int Cl.:
*H01H 85/02* (2006.01)    *H01H 37/76* (2006.01)

(21) Application number: **06253920.0**

(22) Date of filing: **27.07.2006**

(54) **Electrical protection apparatus**

Elektrisches Schutzgerät

Appareil de protection électrique

(84) Designated Contracting States:
**DE FR GB IT**

(30) Priority:  **29.07.2005  JP 2005220235**

(43) Date of publication of application:
**31.01.2007  Bulletin 2007/05**

(73) Proprietor: **NEC SCHOTT Components
Corporation
Koka-shi,
Shiga 528-0034 (JP)**

(72) Inventor: **Nishikawa, Masahiro, NEC Schott
Components Co.
Koka-shi
Shiga 528-0034 (JP)**

(74) Representative: **Addiss, John William et al
Mewburn Ellis LLP
City Tower
40 Basinghall Street
London EC2V 5DE (GB)**

(56) References cited:
**DE-A1- 10 311 090    JP-A- 2000 123 694
JP-A- 2004 319 239    US-A- 5 536 980**

**Description**

The present invention relates to a protection apparatus employing a thermal fuse, including a protection circuit to extend the area of use of the thermal fuse to equipment directed to high voltage and high current. Particularly, the present invention relates to a protection apparatus that can avoid an abnormal event immediately after activation of a thermal fuse by using an electrosensitive fuse with the thermal fuse.

A thermal fuse is a protection component to properly sense abnormal overheating at the electric apparatus and quickly cut off the circuit. A thermal fuse is employed in various home electrical products, portable apparatuses, communication equipment, business machines, in-car devices, air conditioners, AC adapters, chargers, batteries, and electronic components. In general, thermal fuses are mainly classified into two types depending upon the thermosensitive material employed. Specifically, there are known a fusible alloy type thermal fuse using conductive low-melting fusible alloy for the thermosensitive material, and a thermosensitive pellet type thermal fuse employing a non-conductive thermosensitive substance. Both are activated in response to sensing abnormal temperature rise at the electrical apparatus to which it is attached to cut off the current to the electric apparatus. Both function to protect electrical equipment by switching the conductive state of the current-carrying path, and are also referred to as "non-reset thermal switches". In other words, they are protection means for electric products achieving a cut-off state by reversing the conductive state in the initial ordinary temperature state at a predetermined operating temperature. The operating temperature for activation depends on the thermal sensitive material employed. In general, the operating temperature is 60°C to 250°C. A wide selection of general-purpose protection components that function with the rated current in the range of 0.5A to 15A is commercially available.

For example, as disclosed in Japanese Patent Laying-Open Nos. 2005-158681 and 2003-317589, a thermosensitive pellet type thermal fuse that has the characteristics of low internal resistance and high breaking current allows an operating temperature to be set arbitrarily over a wide range by employing a thermosensitive pellet formed of thermoplastic resin. A fusible alloy type thermal fuse with a low cut-off current, hermetically sealed in an insulative case to detect the temperature, has flux attached to low-melting fusible alloy to achieve cut off by rendering the fusible alloy globular when fused, and has a relatively low operating temperature of 60°C-230°C. As disclosed in Japanese Patent Laying-Open Nos. 06-243767 and 04-282523, the flux attached on the surface of the low-melting fusible alloy serves to prevent disturbance of an oxide film and break the electrical connection between electrodes through the fusible alloy that melts at a predetermined temperature and rendered globular by the surface tension, when the low melting fusible alloy is fused at the melting temperature.

Current fuses include various types such as the glass-tube type, the time-lag type that operates with delay, the high withstand voltage and high current type, and the like. In general, the regulation calls for activation within 2 minutes with respect to overcurrent of 200% the rated current. There is also known a fuse that is activated at an elapse of at least one minute of the conducting duration even if the current is below 2 times the rated current. There is also known a resistance fuse that is locally made thin to be blown out by the Joule heat caused by the resistance. In a circuit that uses such a current fuse that interrupts the circuit in response to sensing current, a hazardous condition may be induced by overheating due to generation of Joule heat by the load per se and/or rise of the ambient temperature. To avoid this critical condition, a thermal fuse is used together to cut off the circuit safely to eliminate an overheating state.

A composite structure using a thermal fuse and a current fuse together is also known. The fuse elements are arranged in series connection on the same substrate in an insulative package, including an intermediate electrode. This type of composite fuse is known, as disclosed in Japanese Patent Laying-Open No. 2003-297206, for example. The composite fuse has the tips of a pair of lead conductors secured to a resin base film with an intermediate electrode between the conductor tips, wherein a thermal fuse element and a current fuse element are connected at one side and the other side, respectively. Further, Japanese Patent Laying-Open No. 2000-123694 discloses a composite fuse with a thermal fuse element that is blown by sensing heat generated by a current fuse element. Japanese Patent Laying-Open No. 2000-133102 discloses a composite structure of a current fuse and a thermal fuse, each fuse element connected between an intermediate electrode and each tip of a pair of lead conductors, using a lead frame constituting an outer frame.

JP 2004 319239 discloses a fuse circuit having a thermal fuse connected in parallel with a second fuse having a resistive element. A separate resistive element generates heat when the fuse circuit experiences an overcurrent. This heat causes the thermal fuse to blow. The overcurrent then passes through the second fuse, which blows slightly later than the thermal fuse.

DE 10311090 discloses a fuse circuit having a thermal fuse connected in parallel with a second fuse having a resistive element. When the temperature reaches a predetermined level, the thermal fuse will blow and the entire circuit current will pass through the second fuse, which will then also blow.

In the case where a thermal fuse is to be used attached to an electrical apparatus, an appropriate thermal fuse corresponding to the load capacitance is selected from general-purpose thermal fuses that are commercially available. There are cases where it is desirable to extend the adaptable region of the thermal fuse. For example, a general-purpose type thermal fuse directed to a resistance load using an AC (Alternate Current) power supply corresponds to at most 250V in voltage and at most 15A in current. When this thermal fuse is used with a DC (Direct Current) power supply, the arc discharge that is generated at the time of blowing the thermal fuse may continue to induce disadvantage. In other words, when the thermal fuse senses overheating and is activated at the operating temperature to interrupt the circuit, the plasma generated between the contacts that are cut off by the thermal fuse may continue to cause plasma discharge since the polarity does not change as an alternate current, thus leading to contingencies.

Therefore, the applicable range of the general-purpose type thermal fuse is restricted within the rating condition of at most 24V in voltage and at most 10A in current when the breaking current is high. In the case where the thermal fuse is employed for preventing overheating at a direct current induced resistance load or power supply equipment, it is desirable to eliminate the disadvantage caused by plasma discharge at the time of circuit interruption due to activation of the thermal fuse. There is a demand for a safe protection apparatus that can extend the area of use, employing commercially-available thermal fuses to allow usage at higher voltage and higher current. In the field of general-purpose type current fuses, there are various products exhibiting a wide electric rating and properties with cut-off capability, and are used for the protection of most electrical apparatuses.

The present invention has arisen in the light of the disadvantages set forth above, and an object is to provide a novel and improved protection apparatus including a protection circuit to allow usage of an existing product at higher voltage and higher current. There may be provided a protection apparatus that can accommodate high load, forming a protection circuit by using together an electrosensitive fuse and a thermal fuse which may have a predetermined internal resistance, based on the internal resistance of a general-purpose thermosensitive pellet type thermal fuse or fusible alloy type thermal fuse.

According to the present invention, there is provided a protection apparatus comprising a protection circuit connected in series between a power supply and a load,
wherein said protection circuit comprises
a thermal fuse with a predetermined operating temperature, activated in response to sensing overheating of the power supply and/or load, said thermal fuse being used in a range exceeding the rated voltage value and the rated current value of said thermal fuse, and
an electrosensitive fuse connected in parallel with said thermal fuse, and activated at a predetermined operating current, said electrosensitive fuse adapted to be activated only after said thermal fuse is activated at the predetermined operating temperature;
wherein
said electrosensitive fuse is any of a time lag type, glass tube type, high voltage withstanding type, and direct current voltage type, qualified as a general purpose fuse, and the internal resistance of the electrosensitive fuse is higher than the internal resistance of the thermal fuse whilst ensuring a main current of the load is distributed between the electrosensitive fuse and thermal fuse in normal operation.

The electrosensitive fuse is adapted to be activated only after the thermal fuse has been activated at the predetermined operating temperature. The flowing current of the electrosensitive fuse may be at most 50% the main current in a load steady state. The predetermined operating current at which the electrosensitive fuse is activated may be at least two times the flowing current of the electrosensitive fuse, and set to be lower than 100% the main current. The electrosensitive fuse is blown after activation of the thermal fuse. Accordingly, the discharge generated between the electrodes of the thermal fuse can be prevented.

The protection apparatus of the present invention includes a protection circuit having a thermal fuse and an electrosensitive fuse connected in parallel. The protection circuit is connected in series between a power supply and load. The flowing current of the electrosensitive fuse with respect to the main current is determined by the internal resistance of the electrosensitive fuse and the internal resistance of the thermal fuse employed in the protection circuit. The rated value of the electrosensitive fuse is set based on the flowing current. The internal resistance of the fuses may be as described below. When the internal resistance is to be represented as a resistance value corresponding to the entire length of 25 mm including the lead, the thermosensitive pellet type thermal fuse and the fusible alloy type thermal fuse have an internal resistance of approximately 1.5 m$\Omega$/25 mm at most and approximately 15 m$\Omega$/25 mm at most, respectively. Therefore, both types may be used. The internal resistance of a current fuse is generally larger than that of the thermal fuses set forth above, depending upon the rated current. By using a general-purpose type thermal fuse and general-purpose type current fuse that are commercially available, the protection circuit can be lowered in cost. A protection apparatus employing a thermal fuse that can accommodate the load of high voltage and high current can be provided.

In the protection circuit having a thermal fuse connected in parallel with an electrosensitive fuse of the present invention, the electrosensitive fuse will not be activated unless the thermal fuse is activated. When the thermal fuse is activated at a predetermined operating temperature, the electrosensitive fuse is then activated with a predetermined time lag. Therefore, arc discharge that will be generated when the thermal fuse is activated at the predetermined operating temperature can be suppressed. This is because the voltage applied between the disconnected contacts or the disconnected fusible alloy of the thermal fuse attaining a cut-off state is suppressed since current will flow through the electrosensitive fuse of the protection circuit. Although the electrosensitive fuse will melt due to the large current flowing thereto when the thermal fuse is activated to attain a cut-off state, arc discharge will not occur at the thermal fuse since there is a time lag in the circuit cut-off. The disadvantage involved in discharge following the cut-off of the thermal fuse will not occur. Since a fusible alloy type thermal fuse has the alloy set apart quickly at the time of melting to interrupt the circuit, a time lag of at least several μ seconds will induce no problem. In a thermosensitive pellet type thermal fuse, however, a time lag of at least several seconds is preferable since the circuit is interrupted according to the shift of the movable contacts in response to the melting of the thermosensitive substance.

An advantage of the present invention is that an economic protection apparatus can be provided using general-purpose products commercially available for the thermal fuse and electrosensitive fuse. By connecting an electrosensitive fuse in parallel with a thermal fuse, usage is allowed in an area exceeding the rated voltage and current of a thermal fuse. Further, arc discharge that occurs immediately after cut-off of the thermal fuse can be prevented. Particularly in the area of use of a thermal fuse employed for a power supply or load directed to a high voltage and high current load to prevent overheating, the applicable region to a high load apparatus can be extended by virtue of the parallel connection with an electrosensitive fuse. The disadvantage occurring at the time of overheating can be prevented. The production apparatus of the present invention allows the provision of safety protection means for car air conditioners and motor-driven tools in relation to vehicle-mounted systems and DC motors. Since the applicable range of the thermal fuse can accommodate load with the breaking current of 35A-10000A and voltage of AC600V or DC600V, the adaptive range can be increased.

The foregoing and other objects, features, aspects and advantages of the present invention will become more apparent from the following detailed description of the present invention when taken in conjunction with the accompanying drawings.

IN THE DRAWINGS

Fig. 1 is a circuit diagram of a protection apparatus employing a thermal fuse of the present invention.
Fig. 2 represents the relationship between the current diverted flowing state and fuse internal resistance at a protection circuit in a protection apparatus employing the thermal fuse of the present invention.
Figs. 3A and 3B represent the relationship between the current diverted flowing state and fuse internal resistance at a protection circuit in a protection apparatus employing the thermal fuse of the present invention, the former corresponding to a normal state and the latter corresponding to an activated state.

A protection apparatus employing a thermal fuse of the present invention includes a protection circuit. The protection circuit includes a thermal fuse with a predetermined operating temperature, activated in response to sensing overheating at a power supply and/or a load, and an electrosensitive fuse, connected in parallel with the thermal fuse, and activated at a predetermined operating current. The protection circuit is connected in series with the power supply and load. The electrosensitive fuse is characterized in that it is activated only after the thermal fuse has been activated at a predetermined operating temperature. Since the protection apparatus can be used at a load directed to high voltage and high current, the area of use of the thermal fuse can be extended.

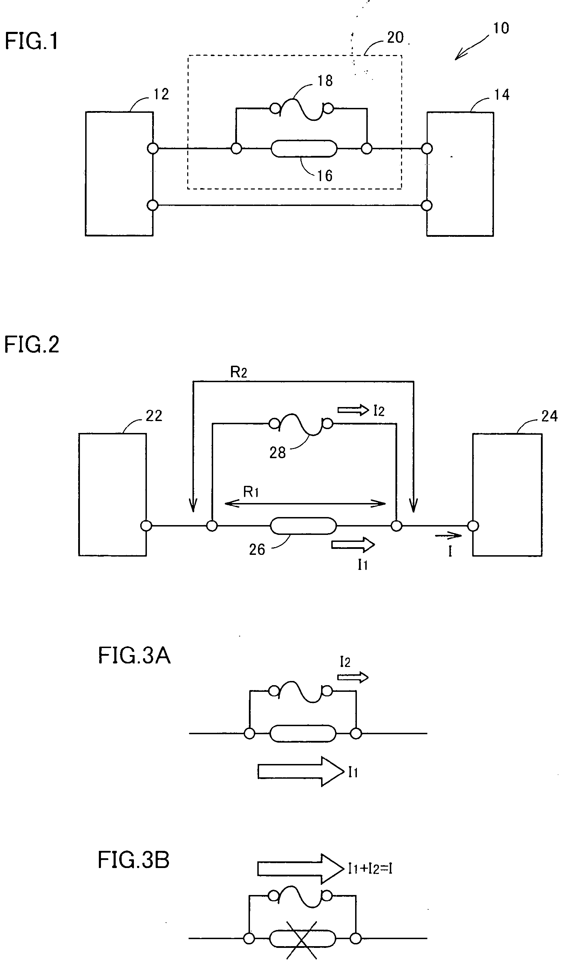

Fig. 1 is a circuit diagram of a protection apparatus employing a thermal fuse of the present invention. A protection apparatus 10 of the present invention has a direct current power supply 12 and a load 14 connected, including a current fuse (not shown) for the main current. A protection circuit 20 includes a thermal fuse 16 and an electrosensitive fuse 18 connected in parallel. Protection circuit 20 is connected in series with power supply 12 and load 14. Thermal fuse 16 may be any of the thermosensitive pellet type or fusible alloy type. An appropriate type of thermal fuse is selected corresponding to the predetermined operating temperature from general-purpose products that are commercially available, depending upon the value of current employed in a normal state. Thermal fuse 16 senses overheating of load 14 and/or power supply 12. Therefore, it can be also used to prevent overheating at a control circuit in power supply 12 as well as circuit components of receptacles and the like.

An electrosensitive fuse 18 with the rating as set forth below is employed. The flowing current through electrosensitive fuse 18 is set preferably to at most 50%, more preferably to at most 20%, and particularly preferably to at most 10% with respect to the main current that flows to the load in a steady state. An electrosensitive fuse 18 is employed having the rated value of the predetermined current at which electrosensitive fuse 18 is activated set preferably to at least 2 times, more preferably to at least 2.2 times, and particularly preferably to at least 2.5 times the flowing current of the electrosensitive fuse. Accordingly, electrosensitive fuse 18 is cut off with a predetermined time lag following activation of thermal fuse 16, such that arc discharge generated across electrodes at the activation of the cut-off of thermal fuse 16 can be prevented. For an electrosensitive fuse, any of a time lag type, glass-tube type, high voltage withstanding type, direct current voltage type, qualified as a general-purpose current fuse, can be selected. The internal resistance of an electrosensitive fuse is higher than the internal resistance of a thermal fuse. The thermal fuse can be employed in a range exceeding the nominal rated voltage value or nominal rated current value of the thermal fuse set forth above.

Fig. 2 and Figs. 3A and 3B represent the relationship between the current diverting state and the internal resistance of each fuse at the protection circuit. As shown in Fig. 2, a thermal fuse 26 has an internal resistance $R_1$, and an electrosensitive fuse 28 has an internal resistance $R_2$. The main current I flowing from a power supply 22 to a load 24 in this circuit is the sum of current $I_1$ flowing through thermal fuse 26 and current $I_2$ flowing through electrosensitive fuse 28. Therefore, current $I_2$ flowing through electrosensitive fuse 28 in a normal operating state is represented by equation (1).

$$I_2 = (R_1 \times I) / (R_1 + R_2) \qquad \ldots (1)$$

From the standpoint of ensuring reliable operation of electrosensitive fuse 28 at main current I, but not at current $I_2$ set forth above, and adjusting the time lag after the thermal fuse is cut off and before the electrosensitive fuse is cut off, electrosensitive fuse 28 is adapted to operate at a current value of preferably lower than 100%, more preferably at most 50%, and particularly preferably at most 36% of main current I. For actual measurements of the total length of 25 mm including the lead employed in a practical circuit, internal resistance $R_1$ is approximately 1.5 mΩ / 25 mm at most for a thermosensitive pellet type thermal fuse, and 0.7 mΩ - 0.9 mΩ / 25 mm for many types. For a fusible alloy type thermal fuse, the internal resistance is approximately 15 mΩ / 25 mm at most, and within the range of 3 mΩ - 10 mΩ / 25 mm for most types. Therefore, any of such types can be employed. Internal resistance $R_2$ of electrosensitive fuse 28 takes an extremely wide range. The actual measurement of an electrosensitive fuse of the general-purpose glass-tube type is approximately 10 mQ - 60 Ω. Table 1 shows the relationship between the rated current and internal resistance for an electrosensitive fuse of the general-purpose glass-tube type.

Table 1

| Rated Current | 50mA | 100mA | 125mA | 250mA | 500mA | 1A | 2A | 5A |
|---|---|---|---|---|---|---|---|---|
| Internal Resistance | 60Ω | 20Ω | 4Ω | 3Ω | 500mΩ | 120mΩ | 50mΩ | 16mΩ |

Specifically, when main current I is approximately 10A and a thermosensitive pellet type thermal fuse with an internal resistance $R_1$ of 1.0 mΩ / 25 mm is employed, current $I_2$ flowing through electrosensitive fuse 28 is as set forth below from equation (1), assuming that internal resistance $R_2$ of the electrosensitive fuse is 20 mΩ

$$I_2 = (1 \times 10) / (1 + 20) = 0.48 \text{ (A)}$$

Since flowing current $I_2$ is 0.48A, the current value of two times the flowing current is 0.96A. Therefore, a general-purpose current fuse having a rating of at least 1A and not more than 10A, and an internal resistance of approximately 20 mΩ is selected as electrosensitive fuse 28 to be used in the protection circuit.

Fig. 1 represents an example of a protection apparatus according to an embodiment of the present invention. When load 14 exhibits overheating during operation such that thermal fuse 16 reaches a predetermined operating temperature, thermal fuse 16 activates to attain a cut-off state. Electrosensitive fuse 18 in parallel connection operates properly in the connected state. Therefore, current flows to load 14, immediately after thermal fuse 16 is cut off, until electrosensitive fuse 18 is activated to attain a cut-off state. As a result, arc discharge generated across electrodes immediately after the cut-off of thermal fuse 16 can be prevented. Thus, the disadvantage involved in activation of the thermal fuse is eliminated. The substantial rated value of the thermal fuse is increased, such that the applicable region is extended as compared to the case where a thermal fuse is employed alone. In other words, there is provided a protection apparatus employing an economic thermal fuse, having the area of use of a commercially-available thermal fuse substantially increased. Such an increase of the applicable region is significant in a resistance load for direct current applications, allowing usage exceeding the nominal rated voltage value or rated current value of a thermal fuse.

Current value $I_2$ flowing through the electrosensitive fuse is obtained from equation (1) set forth above, as shown in Tables 2 and 3, based on internal resistance $R_1$ of the thermal fuse, main current I, and internal resistance $R_2$ of the electrosensitive fuse. Table 2 shows main current I and internal resistance $R_2$ of the electrosensitive fuse as parameters when a thermosensitive pellet type thermal fuse with an internal resistance $R_1$ of 1 mΩ is employed. Table 3 shows main current I and internal resistance $R_2$ of the electrosensitive fuse as parameters when a fusible alloy type thermal fuse with an internal resistance $R_1$ of 5 mΩ is employed.

Table 2

| | | Main Current I (A) | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Internal Resistance (m$\Omega$) of Electrosensitive Fuse | 10 | 0.0909 | 0.1818 | 0.2727 | 0.3636 | 0.4545 | 0.5455 | 0.6364 | 0.7273 | 0.8182 | 0.9091 | 1.0000 | 1.0909 | 1.1818 | 1.2727 | 1.3636 |
| | 20 | 0.0476 | 0.0952 | 0.1429 | 0.1905 | 0.2381 | 0.2857 | 0.3333 | 0.3810 | 0.4286 | 0.4762 | 0.5238 | 0.5714 | 0.6190 | 0.6667 | 0.7143 |
| | 30 | 0.0323 | 0.0645 | 0.0968 | 0.1290 | 0.1613 | 0.1935 | 0.2258 | 0.2581 | 0.2903 | 0.3226 | 0.3548 | 0.3871 | 0.4194 | 0.4516 | 0.4839 |
| | 50 | 0.0196 | 0.0392 | 0.0588 | 0.0784 | 0.0980 | 0.1176 | 0.1373 | 0.1569 | 0.1765 | 0.1961 | 0.2157 | 0.2353 | 0.2549 | 0.2745 | 0.2941 |
| | 100 | 0.0099 | 0.0198 | 0.0297 | 0.0396 | 0.0495 | 0.0594 | 0.0693 | 0.0792 | 0.0891 | 0.0990 | 0.1089 | 0.1188 | 0.1287 | 0.1386 | 0.1485 |
| | 500 | 0.0020 | 0.0040 | 0.0060 | 0.0080 | 0.0100 | 0.0120 | 0.0140 | 0.0160 | 0.0180 | 0.0200 | 0.0220 | 0.0240 | 0.0259 | 0.0279 | 0.0299 |
| | 1000 | 0.0010 | 0.0020 | 0.0030 | 0.0040 | 0.0050 | 0.0060 | 0.0070 | 0.0080 | 0.0090 | 0.0100 | 0.0110 | 0.0120 | 0.0130 | 0.0140 | 0.0150 |

Table 3

| | | Main Current I (A) | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Internal Resistance (mΩ) of Electrosensitive Fuse | 10 | 0.3333 | 0.6667 | 1.0000 | 1.3333 | 1.6667 | 2.0000 | 2.3333 | 2.6667 | 3.0000 | 3.3333 | 3.6667 | 4.0000 | 4.3333 | 4.6667 | 5.0000 |
| | 20 | 0.2000 | 0.4000 | 0.6000 | 0.8000 | 1.0000 | 1.2000 | 1.4000 | 1.6000 | 1.8000 | 2.0000 | 2.2000 | 2.4000 | 2.6000 | 2.8000 | 3.0000 |
| | 30 | 0.1429 | 0.2857 | 0.4286 | 0.5714 | 0.7143 | 0.8571 | 1.0000 | 1.1429 | 1.2857 | 1.4286 | 1.5714 | 1.7143 | 1.8571 | 2.0000 | 2.1429 |
| | 50 | 0.0909 | 0.1818 | 0.2727 | 0.3636 | 0.4545 | 0.5455 | 0.6364 | 0.7273 | 0.8182 | 0.9091 | 1.0000 | 1.0909 | 1.1818 | 1.2727 | 1.3636 |
| | 100 | 0.0476 | 0.0952 | 0.1429 | 0.1905 | 0.2381 | 0.2857 | 0.3333 | 0.3810 | 0.4286 | 0.4762 | 0.5238 | 0.5714 | 0.6190 | 0.6667 | 0.7143 |
| | 500 | 0.0099 | 0.0198 | 0.0297 | 0.0396 | 0.0495 | 0.0594 | 0.0693 | 0.0792 | 0.0891 | 0.0990 | 0.1089 | 0.1188 | 0.1287 | 0.1386 | 0.1485 |
| | 1000 | 0.0050 | 0.0100 | 0.0149 | 0.0199 | 0.0249 | 0.0299 | 0.0348 | 0.0398 | 0.0448 | 0.0498 | 0.0547 | 0.0597 | 0.0647 | 0.0697 | 0.0746 |

The conditions for selecting an electrosensitive fuse is as set forth above. Specifically, the value of the flowing current through the electrosensitive fuse when main current flows properly is obtained from equation (1), Table 2, or Table 3, and the rated current is set to at least two times that value. In this case, the internal resistance of the employed thermal fuse, main current value, and the internal resistance of the electrosensitive fuse per se are required as the factors for determination. Fig. 3A corresponds to a normal state where disconnection will not occur from the relationship of $I_1 \gg I_2$ with the flowing current at protection circuit 20 in a normal usage state. Fig. 3B corresponds to the flowing current state when the thermal fuse of protection circuit 20 is activated at a predetermined operating temperature. When the thermal fuse is activated, main current $I (= I_1 + I_2)$ flows to the electrosensitive fuse, up to its cut-off capability, followed by cut-off. Since the electrosensitive fuse is conductive when the thermal fuse is activated, the disadvantage involved in sparks and welding between the electrodes of the thermal fuse will not occur.

**Claims**

1. A protection apparatus comprising a protection circuit (20) connected in series between a power supply (12) and a load (14),
   wherein said protection circuit (20) comprises
   a thermal fuse (16) with a predetermined operating temperature, activated in response to sensing overheating of the power supply (12) and/or load (14), and
   an electrosensitive fuse (18) connected in parallel with said thermal fuse (16), and activated at a predetermined operating current,
   said electrosensitive fuse (18) adapted to be activated only after said thermal fuse (16) is activated at the predetermined operating temperature;
   **characterised in that**
   said thermal fuse is used in a range exceeding the rated voltage value and the rated current value of said thermal fuse, said electrosensitive fuse (18) is any of a time lag type, glass tube type, high voltage withstanding type, and direct current voltage type, qualified as a general purpose fuse, and the internal resistance of the electrosensitive fuse (18) is higher than the internal resistance of the thermal fuse (16) whilst ensuring a main current of the load is distributed between the electrosensitive fuse (18) and thermal fuse (16) in normal operation.

2. The protection apparatus according to claim 1, wherein a flowing current of said electrosensitive fuse (18) is at most 50% with respect to the main current of said load (14), said predetermined operating current at which said electrosensitive fuse (18) is activated is set to at least two times the flowing current of said electrosensitive fuse (18) and lower than 100% of the main current, and said electrosensitive fuse (18) is cut off after activation of said thermal fuse (16) to prevent generation of discharge across electrodes of said thermal fuse (16).

3. The protection apparatus according to claim 1, wherein said thermal fuse (16) includes a thermosensitive pellet type thermal fuse having an internal resistance of at most 1.5 mΩ/25 mm, or a fusible alloy type thermal fuse having an internal resistance of at most 15 mΩ/25 mm.

4. A protection apparatus according to claim 1 adapted to have a time lag between activation of said thermal fuse (16) at said predetermined operating temperature and activation of said electrosensitive fuse (18).

5. The protection apparatus according to claim 4, wherein said thermal fuse (16) and said electrosensitive fuse (18) are general-purpose type fuses.

**Patentansprüche**

1. Schutzvorrichtung, umfassend eine Schutzschaltung (20), die zwischen einem Netzteil (12) und einer Last (14) in Serie geschaltet ist,
   worin die Schutzschaltung (20) Folgendes umfasst:

   eine Thermosicherung (16) mit einer vorbestimmten Betriebstemperatur, die als Antwort auf das Abfühlen eines Überhitzens des Netzteils (12) und/oder der Last (14) aktiviert wird, und
   eine elektrosensitive Sicherung (18), die mit der Thermosicherung (16) parallel geschaltet ist, und bei einem vorbestimmten Betriebsstrom aktiviert wird,
   wobei die elektrosensitive Sicherung (18) geeignet ist, erst dann aktiviert zu werden, wenn die Thermosicherung (16) bei der vorbestimmten Betriebstemperatur aktiviert wird;

**dadurch gekennzeichnet, dass**

die Thermosicherung in einem Bereich zur Anwendung kommt, der den Spannungs-Nennwert und den Strom-Nennwert der Thermosicherung übersteigt,

wobei die elektrosensitive Sicherung (18) entweder eines Zeitverzögerungs-Typs, eines Glasrohr-Typs, eines Typs mit hoher Spannungsfestigkeit oder eines Gleichspannungs-Typs ist, welche die Kriterien einer Standardsicherung erfüllen, und der Innenwiderstand der elektrosensitiven Sicherung (18) höher als der Innenwiderstand der Thermosicherung (16) ist, wobei bewirkt wird, dass bei Normalbetrieb ein Hauptstrom der Last zwischen der elektrosensitiven Sicherung (18) und der Thermosicherung (16) verteilt wird.

2. Schutzvorrichtung gemäß Anspruch 1, worin ein fließender Strom der elektrosensitiven Sicherung (18) höchstens 50% mit Bezug auf den Hauptstrom der Last (14) beträgt, wobei der vorbestimmte Betriebsstrom, bei dem die elektrosensitive Sicherung (18) aktiviert wird, auf mindestens das Zweifache des fließenden Stroms der elektrosensitiven Sicherung (18) und niedriger als 100% des Hauptstroms eingestellt ist, und worin die elektrosensitive Sicherung (16) nach Aktivierung der Thermosicherung (16) abgeschaltet wird, um das Erzeugen von Entladung zwischen Elektroden der Thermosicherung (16) zu verhindern.

3. Schutzvorrichtung gemäß Anspruch 1, worin die Thermosicherung (16) eine thermosensitive Pellet-Typ-Thermosicherung, die einen Innenwiderstand von höchstens 1,5 mΩ / 25 mm aufweist, oder eine Legierungs-Typ-Schmelz-Thermosicherung, die einen Innenwiderstand von höchstens 15 mΩ / 25 mm aufweist, umfasst.

4. Schutzvorrichtung gemäß Anspruch 1, die geeignet ist, eine Zeitverzögerung zwischen der Aktivierung der Thermosicherung (16) bei der vorbestimmten Betriebstemperatur und der Aktivierung der elektrosensitiven Sicherung (18) aufzuweisen.

5. Schutzvorrichtung gemäß Anspruch 4, worin die Thermosicherung (16) und die elektrosensitive Sicherung (18) Standard-Typ-Sicherungen sind.


**Revendications**

1. Dispositif de protection comprenant un circuit de protection (20) monté en série entre une alimentation électrique (12) et une charge (14),

dans lequel ledit circuit de protection (20) comprend

un fusible thermique (16) avec une température de fonctionnement prédéterminée, activé en réponse à la détection d'une surchauffe de l'alimentation électrique (12) et/ou de la charge (14), et

un fusible électrosensible (18) connecté en parallèle avec ledit fusible thermique (16), et activé à un courant de fonctionnement prédéterminé,

ledit fusible électrosensible (18) étant adapté à être activé seulement après que ledit fusible thermique (16) ait été activé à la température de fonctionnement prédéterminée ;

**caractérisé en ce que**

ledit fusible thermique est utilisé dans une plage dépassant la valeur de tension nominale et la valeur de courant nominal dudit fusible thermique,

ledit fusible électrosensible (18) est l'un quelconque d'un type à décalage temporel, d'un type de tube de verre, d'un type résistant à une tension élevée, et d'une type à tension de courant continu, qualifié de fusible tout usage, et la résistance interne du fusible électrosensible (18) est supérieure à la résistance interne du fusible thermique (16) tout en assurant qu'un courant principal de la charge est réparti entre le fusible électrosensible (18) et le fusible thermique (16) en fonctionnement normal.

2. Dispositif de protection selon la revendication 1, dans lequel un courant circulant dudit fusible électrosensible (18) est au plus égal à 50 % par rapport au courant principal de ladite charge (14), ledit courant de fonctionnement prédéterminé auquel ledit fusible électrosensible (18) est activé est réglé à au moins deux fois le courant circulant dudit fusible électrosensible (18) et inférieur à 100 % du courant principal, et ledit fusible électrosensible (18) est coupé après activation dudit fusible thermique (16) pour empêcher une génération de décharge(s) à travers les électrodes dudit fusible thermique (16).

3. Dispositif de protection selon la revendication 1, dans lequel ledit fusible thermique (16) comprend un fusible thermique du type pastille thermosensible ayant une résistance interne d'au plus 1,5 mΩ/25 mm, ou un fusible thermique du type alliage fusible ayant une résistance interne d'au plus 15 mΩ/25 mm.

4. Dispositif de protection selon la revendication 1, adapté pour avoir un décalage temporel entre l'activation dudit fusible thermique (16) à ladite température de fonctionnement prédéterminée et l'activation dudit fusible électrosensible (18).

5. Dispositif de protection selon la revendication 4, dans lequel ledit fusible thermique (16) et ledit fusible électrosensible (18) sont des fusibles du type tout usage.

FIG.1

FIG.2

FIG.3A

FIG.3B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005158681 A
- JP 2003317589 A
- JP 6243767 A
- JP 4282523 A
- JP 2003297206 A
- JP 2000123694 A
- JP 2000133102 A
- JP 2004319239 A
- DE 10311090